# EUROPÄISCHE PATENTANMELDUNG

(11) **EP 3 476 902 A1**
(43) Veröffentlichungstag der Anmeldung: **01.05.2019**
(21) Anmeldenummer: 17199042.7
(22) Anmeldetag: 27.10.2017
(51) Int. Cl.: C09D 5/00, C11D 1/00, C11D 1/94, C09D 7/45

(54) **ZUSAMMENSETZUNGEN ZUR VERHINDERUNG VON ABLAGERUNGEN**

(71) Anmelder: Geberit International AG, 8645 Jona (CH)
(72) Erfinder: MEIER, Lorenz, 8006 Zürich (CH); WIDLER, Roland, 8335 Hittnau (CH); PFAFFENROTH, Cornelia, 8615 Wermatswil (CH)
(74) Vertreter: Frischknecht, Harry Ralph

(57) **Zusammenfassung**

Zusammensetzung zur Verhinderung von Ablagerungen auf einer mit einer wässrigen Flüssigkeit in Kontakt stehenden Oberfläche eines Polymerelementes, umfassend ein erstes Tensid und ein zweites Tensid, dadurch gekennzeichnet dass es sich beim ersten Tensid um eine alkoxylierte Verbindung handelt und es sich beim zweiten Tensid um einen amphoteren Fettsäureester handelt.

## Beschreibung

### TECHNISCHES GEBIET

Die vorliegende Erfindung betrifft Zusammensetzungen zur Verhinderung von Ablagerungen auf einer mindestens zeitweise mit einer Flüssigkeit in Kontakt stehenden Polymeroberfläche.

### STAND DER TECHNIK

Ein anhaltendes Problem in wasserführenden Installationen, wie beispielsweise Wasserverteilungs- oder Abwasserleitungen, sind Ablagerungen, welche deren optimale Funktionsweise beeinträchtigen können. Als besonders problematisch erweisen sich dabei nicht näher spezifizierbare Mischungen aus anorganischen Ausfällungen wie zum Beispiel Karbonate oder Sulfate von Erdalkalimetallen wie zum Beispiel Kalzium oder Magnesium, die meist kombiniert mit Biofilmbildung auftreten.

So wird zum Beispiel zur Verhinderung von solchen anorganischen Ablagerungen Wasser mit Stoffen versetzt, welche das Ausfällen von anorganischen Verbindungen verhindern. Stoffe mit einer solchen Eigenschaft sind unter anderem Polyphosphate oder andere Komplexbildner. Weiterhin ist es im Zusammenhang mit technischen Kreisläufen bereits bekannt, unter Zusatz von Kohlendioxid oder anderen Säurebildnern den pH des Zu- oder Abwassers so zu beeinträchtigen, dass keine Ablagerungen entstehen oder sogar bestehende Ablagerungen gelöst werden. Solche Massnahmen vermögen die Bildung von Ablagerungen teilweise zu hemmen, leiden aber am Umstand, dass eine andauernde Kontrolle, um a) die Länge der Behandlung und b) die Dosierung solcher Stoffe in einem wirtschaftlichen Rahmen zu halten, erforderlich ist.

Eine weitere Methode zur Verhinderung von anorganischen Ablagerungen ist die Wasserenthärtung, bei der vor allem Erdalkalimetallionen wie zum Beispiel Kalzium oder Magnesium gegen Na-Ionen ausgetauscht werden, z.B. mit sogenannten Ionentauscherharzen. Auch die Verwendung von solchen Ionenaustauschern kann die Entstehung von Ablagerung hemmen, jedoch müssen die Ionenaustauscher periodisch entweder ersetzt oder zumindest regeneriert werden.

Weiterhin können Teile, welche in wasserführenden Installationen in Ihrer Funktion durch Ablagerungen beeinträchtigt werden könnten, mit speziellen Beschichtungen, die aufgrund von verschieden physikalisch-chemischen Wechselwirkungen einen Schutzeffekt entfalten, versehen werden.

Eine mögliche Wechselwirkung besteht darin, dass die Oberflächenstruktur so verändert wird, dass diese eine vollständige Benetzung der Oberfläche durch Wasser verhindert. Eine Realisierungsvariante hiervon sind die sogenannten superhydrophoben Oberflächen, bekannt unter dem Begriff "Lotus-Effekt". Dabei wird das Wasser so stark von der Oberfläche abgestossen, dass es kugelförmige Tropfen bildet und abrollt - ohne die Oberfläche zu benetzen.

Alternativ hierzu werden seit einiger Zeit superhydrophile Oberflächen als mögliche Massnahme gegen Ablagerungen untersucht, welche sehr polar sind und somit von Wasser sehr gut benetzt werden. Die Behandlung einer Oberfläche erfolgt im Allgemeinen durch Aufbringen einer speziellen Zusammensetzung und obwohl Ablagerungen auch hiermit vermindert werden können, so leiden die bekannten Zusammensetzungen an dem Nachteil, dass sie innerhalb kurzer Zeit wieder ausgewaschen werden oder mechanisch nur wenig stabil sind und die superhydrophile Eigenschaft der Oberfläche verloren geht.

Angesichts der obigen Probleme ist es eine Aufgabe der vorliegenden Erfindung, Massnahmen bereitzustellen, welche der Entstehung von Ablagerungen auf mindestens zeitweise mit Wasser in Kontakt stehenden Polymeroberflächen entgegenwirken und welche nicht einer komplexen Überwachung und/oder Steuerung benötigen und welche bevorzugt unabhängig der Art der zu verhindernden Ablagerung eine gute Beständigkeit bzw. Funktionsdauer vorweisen sowie einfach auf die zu behandelnde Polymeroberfläche angewendet werden können.

### DARSTELLUNG DER ERFINDUNG

Die eingangs genannten Probleme können durch die erfindungsgemässen Zusammensetzungen nach Anspruch 1 gelöst werden, die eine Mischung aus einem ersten Tensid und einem zweiten Tensid umfassen. Insbesondere wirken die erfindungsgemässen Zusammensetzungen der Entstehung von Ablagerungen auf mit Wasser in Kontakt stehenden Oberflächen entgegen, benötigen keine komplexe Überwachung und/oder Steuerung der Dosierung der Anlage, weisen eine ausserordentlich gute Beständigkeit bzw. Funktionsdauer vor und können einfach auf die zu behandelnde Oberfläche angewendet werden.

Es ist ein Gegenstand der vorliegenden Erfindung, eine Zusammensetzung zur mindestens teilweisen Verhinderung von Ablagerungen wie mineralische Ablagerungen auf einer Polymeroberfläche bereitzustellen, die dazu bestimmt ist mit einer wässrigen Flüssigkeit in Kontakt zu stehen, umfassend ein erstes Tensid und ein zweites Tensid, dadurch gekennzeichnet, dass es sich beim ersten Tensid um mindestens eine alkoxylierte Verbindung oder einer Mischung hiervon handelt und es sich beim zweiten Tensid um mindestens um einen amphoteren Fettsäureester oder einer Mischung hiervon handelt und dass das zweite Tensid gegenüber dem ersten Tensid im molaren Überschuss vorliegt.

In einer bevorzugten Ausführungsform der vorliegenden Erfindung hat der amphotere Fettsäureester einen HLB-Wert zwischen 1 und 9, und bevorzugt zwischen 3 und 7. Dabei handelt es sich im Wesentlichen um amphotere Fettsäureester, die in der Lage sind, Wasser-in-Öl-Emulsionen zu bilden.

In einer bevorzugten Ausführungsform erstreckt sich der sich in Richtung der wässrigen Flüssigkeit erstreckende polare Teil des zweiten Tensids über eine geringere Distanz in Richtung der wässrigen Flüssigkeit als der sich in Richtung der wässrigen Flüssigkeit erstreckende polare Teil des ersten Tensids.

In einer bevorzugten Ausführungsform der vorliegenden Erfindung liegt der molare Überschuss an amphoteren Fettsäureester, bezogen auf das erste Tensid, bei mindestens 25% oder 25% bis 250%, bevorzugt mindestens 35% oder 35% bis 250 %, und mehr bevorzugt mindestens 40% oder 40% bis 200%. Insbesondere liegt der molare Überschuss an amphoteren Fettsäureester bei mindestens 25% oder 25% bis 100%, bevorzugt mindestens 25% oder 25% bis 80 % wenn es sich beim ersten Tensid um eine alkoxylierte Phenolverbindung oder beim zweiten Tensid um ein Phosphatidylcholin handelt.

In einer bevorzugten Ausführungsform der vorliegenden Erfindung handelt es sich bei der alkoxylierten Verbindung um eine alkoxylierte Phenolverbindung wie beispielsweise aryl- oder styryl substituierte Phenolverbindungen, bevorzugt um eine styryl-substituierte Phenolverbindungen..

In einer bevorzugten Ausführungsform der vorliegenden Erfindung handelt es sich beim bei der alkoxylierten Verbindung um eine alkoxylierte Phenolverbindung wie beispielsweise diaryl- oder distyryl substituierte Phenolverbindungen, bevorzugt um eine distyryl-substituierte Phenolverbindung.

In einer bevorzugten Ausführungsform der vorliegenden Erfindung handelt es sich bei der alkoxylierten Phenolverbindungum um ethoxylierte Distyrylphenole, mit vorzugsweise einer mittleren molaren Masse von zwischen 790 und 1010 g/mol.

In einer alternativen Ausführungsform der vorliegenden Erfindung handelt es sich beim zweiten Tensid um ein amphoteres Fettsäureamid, und insbesondere ein Betain, oder eine Mischung aus den genannten amphoteren Fettsäureestern wie Phosphatidylcholine und Fettsäureamiden wie Betaine.

In einer bevorzugten Ausführungsform der vorliegenden Erfindung handelt es sich bei der Zusammensetzung um eine Flüssigkeit, in der das erste und das zweite Tensid gelöst sind. In einer bevorzugten Ausführungsform der vorliegenden Erfindung handelt es sich bei der Polymeroberfläche um eine Polymeroberfläche einer Sanitäranlage, wie beispielsweise die Innenoberfläche eines Rohrs und/oder bei der wässrigen Flüssigkeit um Trinkwasser, Spülwasser, Abwasser wie insbesondere Schwarzwasser, Grauwasser oder Gelbwasser.

In einer bevorzugten Ausführungsform der vorliegenden Erfindung handelt es sich bei den Ablagerungen um mineralische Ablagerungen wie Kalkablagerungen oder um Urinstein..

In einer bevorzugten Ausführungsform der vorliegenden Erfindung handelt es sich bei der Polymeroberfläche um eine Polyolefin- oder Polykondensatoberfläche, insbesondere um solche aus schlagzäh-modifiziertes Polystyrol (HIPS), PP, PE, PS oder SB.

Weiterhin ist es ein Gegenstand der vorliegenden Erfindung, eine Verwendung der oben genannten Zusammensetzungen zur Verhinderung von Ablagerungen wie mineralischen Ablagerungen auf einer Polymeroberfläche, die dazu bestimmt ist mit einer wässrigen Flüssigkeit in Kontakt zu stehen, bereitzustellen.

Weiterhin ist es ein Gegenstand der vorliegenden Erfindung, eine Polymeroberfläche, die dazu bestimmt ist mindestens zeitweise mit einer wässrigen Flüssigkeit in Kontakt zu stehen und welche auf mindestens einer Teiloberfläche der besagten Polymeroberfläche mit einer der oben genannten Zusammensetzungen behandelt wurde, bereitzustellen.

Weiterhin ist es ein Gegenstand der vorliegenden Erfindung, ein Verfahren zur Verhinderung von Ablagerungen wie mineralischen Ablagerungen auf einer Polymeroberfläche, die dazu bestimmt ist mit einer wässrigen Flüssigkeit in Kontakt zu stehen, bereitzustellen, dadurch gekennzeichnet dass mindestens eine Teiloberfläche der Polymeroberfläche mit einer der oben genannten Zusammensetzungen kontaktiert wird, und dass vorzugsweise während des Kontakts zwischen der mindestens einen Teiloberfläche und der Zusammensetzung die Zusammensetzung erwärmt wird.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:

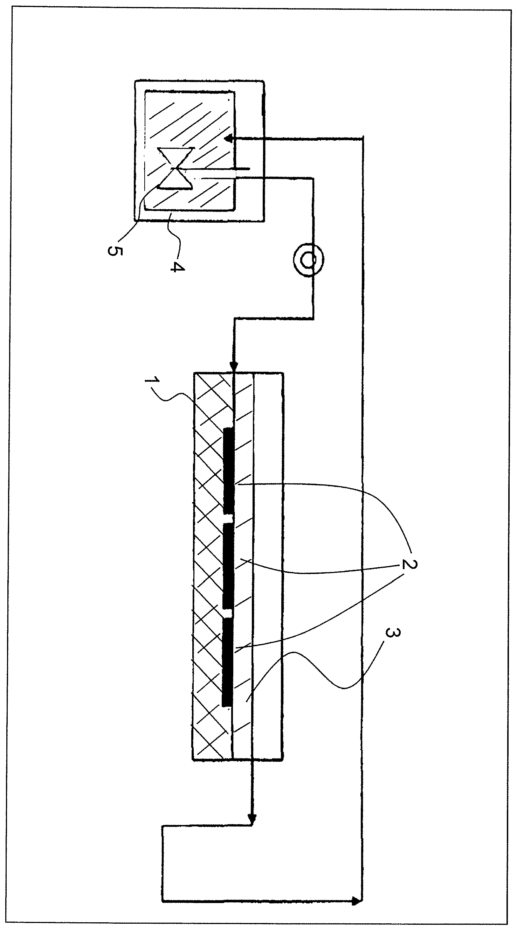

- Fig. 1: zeigt schematisch eine Prüfapparatur, mit der die Ablagerungen gemessen werden können. Die Prüfapparatur umfasst einen Prüfstand (1) indem Plättchen (2) in einer Testlösung (3) eingetaucht werden und von dieser umspült werden. Die Testlösung wird aus einem mit einem Rührer (5) ausgestatteten Vorratsgefäss (4) in den Prüfstand (1) geleitet und aus diesem wieder zurück ins Vorratsgefäss (4) geleitet.

### BESCHREIBUNG BEVORZUGTER AUSFÜHRUNGSFORMEN

Es ist ein Gegenstand der vorliegenden Erfindung, eine Zusammensetzung zur Verhinderung von Ablagerungen wie mineralischen Ablagerungen auf einer Polymeroberfläche bereitzustellen, die dazu bestimmt ist mit einer wässrigen Flüssigkeit in Kontakt zu stehen, umfassend ein erstes Tensid und ein zweites Tensid, dadurch gekennzeichnet, dass es sich beim ersten Tensid um mindestens eine alkoxylierte Verbindung, wie beispielsweise alkoxylierte Phenolverbindungen, oder einer Mischung hiervon handelt und es sich beim zweiten Tensid um eine ionische Verbindung, beispielsweise mindestens einen amphoteren Fettsäureester oder einer Mischung hiervon handelt und dass das zweite Tensid gegenüber dem ersten Tensid im molaren Überschuss vorliegt. Insbesondere handelt es sich bei der ionischen Verbindung um eine nicht alkoxylierte ionische Verbindung wie amphotere Fettsäureester.

Die Ablagerungen, welche bei Anwendung der erfindungsgemässen Zusammensetzung verhindert werden können sind unter anderem mineralische Ablagerungen wie beispielsweise Kalkablagerungen, welche im Wesentlichen aus Karbonaten oder Sulfaten von Erdalkalimetallen wie zum Beispiel Kalzium oder Magnesium bestehen. Allgemein steigt für einen bestimmten Benützungszeitraum die Menge der Ablagerungen mit der Konzentration der die Ablagerung bildenden Stoffe im Wasser. Insbesondere sind die erfindungsgemässen Zusammensetzungen bei hartem Wasser, also Wasser mit einer Härte von gleich oder höher als 14° dH nützlich, da in solchen Fällen die Lebensdauer und/oder Funktionsdauer von unbehandelten Polymeroberflächen auf einen unakzeptablen Zeitraum verkürzt würde. Weiterhin sind die erfindungsgemässen Zusammensetzungen insbesondere für die Verhinderung von gemischt organischen und mineralischen Ablagerungen wie beispielsweise Urinstein, welche aus Urin oder Gelbwasser und aufgrund der darin enthaltenen Harnsäure in Form einer unlöslichen Kalk-Magnesiaverbindung ausfällen.

Die erfindungsgemässe Zusammensetzung umfasst mindestens ein erstes Tensid und mindestens ein zweites Tensid. Dabei ist es möglich, dass es sich beim ersten Tensid um eine einzelne alkoxylierte Verbindung oder um einen Mischung aus mehreren alkoxylierten Verbindungen handelt. Analog ist es möglich, dass es sich beim zweiten Tensid um einen einzelnen amphoteren Fettsäureester oder um einen Mischung aus mehreren amphoteren Fettsäureestern handelt.

In einer bevorzugten Ausführungsform der vorliegenden Erfindung hat der amphotere Fettsäureester einen HLB-Wert zwischen 1 und 9, und bevorzugt zwischen 3 und 7, gemessen nach Davies. Dabei handelt es sich im Wesentlichen um amphotere Fettsäureester, die in der Lage sind Wasser-in-Öl-Emulsionen zu bilden.

Amphotere Fettsäureester die für eine Verwendung in der erfindungsgemässen Zusammensetzung als zweites Tensid geeignet sind, bestehen wie alle Tenside aus einem unpolaren und einem polaren Teil, wobei der unpolare Teil des Moleküls sich an der zu behandelnden Fläche an- bzw. einlagert und somit eine ausreichende Haftung bereitstellt und der polare Teil sich in Richtung der wässrigen Flüssigkeit erstreckt und somit die benetzungsmodifizierende Komponente darstellt. Insbesondere werden in der vorliegenden Erfindung amphotere Fettsäureester verwendet, in denen der polare Teil durch einen amphoteren Rest gebildet wird.

Insbesondere bevorzugt sind gemäss der vorliegenden Erfindung amphotere Fettsäureester, die wie jedes Tensid aus einem polaren und einem unpolaren Teil aufgebaut sind und wobei als unpolarer Teil ein Alkyl- oder Alkenylrest und/oder als polarer Teil meist eine Carboxylat-Rest oder Phosphat-Rest zusammen mit einer quartären Ammonium-Rest dient.

In einer weiteren bevorzugten Ausführungsform der vorliegenden Erfindung handelt es sich beim zweiten Tensid um ein amphoteres Phospholipid wie Lecithin oder L-α-Phosphatidylcholin. Alternative, ebenfalls für die Verwendung in den Zusammensetzungen der vorliegenden Erfindung geeignete zweite Tenside sind amphotere Fettalkoholester wie beispielsweise amphotere Cholesterolester, amphotere Cetylstearylalkoholester, amphotere Lanolinalkoholester, amphotere Stearinsäureester, amphotere Tristearine, amphotere Sorbitanmonostearate, oder amphotere Polyglyceryl-2-distearate. Alternative, jedoch ebenfalls für die Verwendung in den Zusammensetzungen der vorliegenden Erfindung geeignete zweite Tenside sind beispielsweise sind amphotere Fettsäureester welche aus der Kondensation eines einwertigen amphoteren Alkohols mit einer Fettsäure entstehen können. Möglich sind auch Mischungen aus mindestens einem amphoteren Fettsäureester mit einem oder mehreren amphoteren Fettalkoholester.

In einer bevorzugten Ausführungsform handelt es sich in der erfindungsgemässen Zusammensetzung beim zweiten Tensid um amphotere Phospholipide wie zum Beispiel Phosphatidylethanolamine und Phosphatidylcholine oder um eine Mischung aus Phosphatidylethanolaminen und Phosphatidylcholinen.

Tenside, die für eine Verwendung in der erfindungsgemässen Zusammensetzung als erstes Tensid geeignet sind, bestehen wie alle Tenside aus einem unpolaren und einem polaren Teil, wobei der unpolare Teil des Moleküls sich an der zu behandelnden Polymeroberfläche an- oder einlagert und somit eine ausreichende Haftung bereitstellt und der polare Teil sich in Richtung der wässrigen Flüssigkeit erstreckt und somit die benetzungsmodifizierende Komponente des Moleküls darstellt. Insbesondere werden in der vorliegenden Erfindung als erste Tenside alkoxylierte Tenside verwendet, in denen der polare Teil durch die Polyalkylenoxidreste gebildet wird und in denen der unpolare Teil des Moleküls durch im Wesentlichen lipophile Reste gebildet wird, wie beispielsweise gerade oder verzweigte Alkyl-, Alkenyl- oder auch Arylreste. Dabei umfasst der Polyalkylenoxidrest im jeweiligen ersten Tensid bevorzugt mindestens drei Alkylenoxid-Wiederholungseinheiten oder zwischen 3 und 25, weiter bevorzugt zwischen 3 und 20 Alkylenoxid-Wiederholungseinheiten, wobei es sich dabei innerhalb des Polyalkylenoxidrestes sowohl um identische als auch verschiedene Wiederholhungseinheiten handeln kann.

Alkoxylierte Verbindungen, die für eine Verwendung in der erfindungsgemässen Zusammensetzung als erstes Tensid geeignet sind, sind bevorzugt nichtionische Tenside. Die für die Zwecke der vorliegenden Erfindung besonders nützlichen nichtionischen alkoxylierte Tenside sind solche, in denen der Polyalkylenoxidrest mindestens drei Alkylenoxid-Wiederholeinheiten umfasst, also beispielsweise für den Fall eines nichtionischen ethoxylierten Tensids einen Polyethylenoxidrest gemäss der Formel -CH₂-CH₂-O-CH₂-CH₂-O-CH₂-CH₂-OH sein kann.

In einer alternativen Ausfuhrungsform der vorliegenden Erfindung handelt es sich beim ersten Tensid um einen alkoxylierten Alkohol, und insbesondere um einen alkoxylierten Fettsäurealkohol wie beispielsweise einen propoxylierten Fettsäurealkohol oder insbesondere Mischungen solcher hiervon. Beispielsweise finden in der vorliegenden Erfindung alkoxylierte Fettsäurealkohole mit einer Fettsäurenkettenlänge von C10 bis C22, insbesondere mit einer Fettsäurenkettenlänge von C10 bis C16 Verwendung. Die für die Zwecke der vorliegenden Erfindung besonders nützlichen alkoxylierten Fettalkohole sind solche, in denen der Polyalkylenoxidrest von 3 bis 10 Alkylenoxid-Wiederholeinheiten umfasst, also beispielsweise für den Fall eines propoxylierten Fettsäurealkohols einen Polypropylenoxidrest gemäss der Formel O-(CH₃)CH-CH₂-O-(CH₃)CH-CH₂-O-(CH₃)CH-CH₂-OH sein kann.

In einer weiteren bevorzugten Ausführungsform der vorliegenden Erfindung handelt es sich beim ersten Tensid um eine alkoxylierte Phenolverbindung, einen alkoxylierten (Alkyl)phenol, um einen alkoxylierten (Arylalkyl)phenol oder um ein Polykondensat aus einem der vorgenannten Phenole und einem Aldehyd, insbesondere Formaldehyd. Beispielsweise finden in der vorliegenden Erfindung alkoxylierte (Alkyl)phenole wie alkoxylierte Nonylphenole und alkoxylierte Styrylphenole, di- oder tri-Styrylphenole Verwendung. Insbesondere sind Polykondensate aus einem der vorgenannten alkoxylierten Phenole und einem Aldehyd, insbesondere Formaldehyd, sogenannte Phenolharze, für die Zwecke der Vorliegenden Erfindung non Nutzen, mit der Massgabe, dass diese zur Auftragung auf die Polymeroberflächen entweder flüssig sind oder in einem geeigneten Lösungsmittel gelöst werden können. Alkoxylierte (Arylalkyl)phenole oder Polykondensate eines solchen Phenols sind solche, in denen der Polyalkylenoxidrest von 10 bis 20 Alkylenoxid-Wiederholeinheiten umfasst.

In einer weiteren bevorzugten Ausführungsform der vorliegenden Erfindung handelt es sich beim ersten Tensid um eine alkoxylierte Phenolverbindung, einen ethoxylierten (Alkyl)phenol, um einen ethoxylierten (Arylalkyl)phenol oder um ein Polykondensat aus einem der vorgenannten Phenole und einem Aldehyd, insbesondere Formaldehyd. Beispielsweise finden in der vorliegenden Erfindung ethoxylierte (Alkyl)phenole wie ethoxylierte Nonylphenole und ethoxylierte Styrylphenole, di- oder tri-Styrylphenole Verwendung. Insbesondere sind Polykondensate aus einem der vorgenannten ethoxylierten Phenole und einem Aldehyd, insbesondere Formaldehyd, sogenannte Phenolharze, für die Zwecke der Vorliegenden Erfindung von Nutzen, mit der Massgabe, dass diese zur Auftragung auf die Polymeroberflächen entweder flüssig sind oder in einem geeigneten Lösungsmittel gelöst werden können.

In einer bevorzugten Ausführungsform handelt es sich bei der erfindungsgemässen Zusammensetzung beim ersten Tensid um ethoxyliertes Nonylphenol oder eine ethoxylierte Phenolverbindung. Dabei kann es sich um para-Nonylphenol oder ortho-Nonylphenol oder auch um Gemische deren handeln.

In einer bevorzugten Ausführungsform handelt es sich bei der erfindungsgemässen Zusammensetzung beim ersten Tensid um eine alkoxylierte aryl-substituierte Phenolverbindung, bevorzugt um eine styryl-substituierte Phenolverbindung, welche bevorzugt 10 bis 15 Alkylenoxid-Wiederholeinheiten und insbesondere Ethylenoxid-Wiederholeinheiten umfasst.

In einer bevorzugten Ausführungsform handelt es sich bei der erfindungsgemässen Zusammensetzung beim ersten Tensid um eine alkoxylierte diaryl-substituierte Phenolverbindung, bevorzugt um eine distyryl-substituierte Phenolverbindung, welche vorzugsweise eine mittleren molaren Masse von zwischen 790 und 1010 g/mol hat.

Im Sinne der vorliegenden Erfindung bezeichnet ein in Klammern gesetzter Substituent sowohl die substituierte, als auch die nicht substituierte Alternative eines Stoffes. So bezeichnet zum Beispiel (Alkyl)phenol sowohl den alkylsubstituierten Phenol als auch den nicht mit einem Alkylrest substituierten Phenol.

In einer bevorzugten Ausführungsform der vorliegenden Erfindung handelt es sich bei der Zusammensetzung um eine Flüssigkeit, in der das erste und das zweite Tensid in einem bevorzugt nichtwässrigen Lösungsmittel gelöst sind. Lösungsmittel, die sich hierfür eignen, sind organische Lösungsmittel und insbesondere nicht polare Lösungsmittel wie beispielsweise Toluol oder polare protische Lösungsmittel wie Octanol oder organische oder mineralische Öle wie Naphtha oder Petroleumöl.

In einer bevorzugten Ausführungsform der vorliegenden Erfindung handelt es sich bei der Polymeroberfläche um eine Polymeroberfläche einer Sanitäranlage, wie beispielsweise die Innenoberfläche einer Leitung wie zum Beispiel ein Rohr oder Siphon, die Innenoberfläche eines Spülkastens oder die Oberflächen von inneren Elementen eines Spülkastens wie zum Beispiel vom Füllventil und/oder bei der wässrigen Flüssigkeit um Trinkwasser, Spülwasser, Abwasser wie insbesondere Schwarzwasser, Grauwasser oder Gelbwasser. Weitere mögliche Komponenten in der Installationstechnik sind Pumpen und Wasserzähler.

Die wässrigen Flüssigkeiten, aus denen bei Anwendung der erfindungsgemässen Zusammensetzung mineralische Ablagerungen wie Kalkablagerungen verhindert werden können, sind insbesondere Gelbwasser, aus dem Urinstein ausfällt und sich an der Polymeroberfläche anreichern kann.

In einer bevorzugten Ausführungsform der vorliegenden Erfindung handelt es sich bei den mineralische Ablagerungen um Kalkablagerungen oder um Urinstein welcher sich auch teilweise aus organisch/inorganisch gemischten Kalkablagerungen zusammensetzt.

In einer bevorzugten Ausführungsform der vorliegenden Erfindung handelt es sich bei der Polymeroberfläche um Oberflächen aus thermoplastischen Polymeren oder aushärtenden bzw. vernetzenden Polymeren wie Elastomere. Geeignete thermoplastische Polymere sind Polyolefine wie Polyethlen, Polypropylen, Styrol-Butadien (SB) Copolymer, insbesondere HIPS, oder Acrylnitril-Butadien-Styrol (ABS) Copolymere oder Polykondensate wie Polyamide (PA), Polyester (PET, PBT). Geeignete vernetzte Polymere sind beispielsweise Copolymere aus 1,3-Butadien und Styrol (SBR), Silikon (MQ) oder EPDM.

Die mit einer wässrigen Flüssigkeit in Kontakt stehende Oberfläche kann entweder dauerhaft oder unterbrochen mit der wässrigen Flüssigkeit in Kontakt stehen, wobei entweder die ganze Oberfläche oder auch nur ein Teil der Oberfläche mit der wässrigen Flüssigkeit in Kontakt stehen kann.

Die Polymeroberfläche kann beispielsweise die Innenoberfläche einer flüssigkeitsführenden Leitung sein, bei denen die Innenoberfläche mit einer wässrigen Flüssigkeit in Kontakt steht oder um Polymeroberflächen von Innenelementen von Spül- und Wasserkästen.

Ohne eine abschliessende Theorie für die aussergewöhnliche Wirksamkeit der erfindungsgemässen Zusammensetzung liefern zu wollen, liegt der Grund dafür wahrscheinlich darin, dass die Kombination von zwei verschiedenen Tensiden eine hydrophile Grenzschicht an der Polymeroberfläche erzeugt, in der das zweite Tensid die Benetzung fördert während das erste Tensid auf molekularer Ebene als eine Art Abstandshalter für die mineralischen Keime oder für die Moleküle des zweiten Tensids fungiert, und somit Teile der Oberfläche eher aus alkoxylierten "Patches" an erstem Tensid oder eher aus "Patches" aus zweitem Tensid bestehen. Für den Fall, dass der sich in Richtung der wässrigen Flüssigkeit erstreckende polare Teil des zweiten Tensids kürzer ist als der sich in Richtung der wässrigen Flüssigkeit erstreckende polare Teil des ersten Tensids, bilden die entsprechenden "Patches" jeweils höhere und tiefere, sich in Ihrer chemischen Zusammensetzung unterscheidende Abschnitte, die Ablagerungen wie Kalkablagerungen entgegenwirken.

Weiterhin ist es ein Gegenstand der vorliegenden Erfindung, eine Verwendung der oben genannten Zusammensetzungen zur Verhinderung von Ablagerungen wie mineralischen Ablagerungen auf einer Polymeroberfläche, die dazu bestimmt ist, mit einer wässrigen Flüssigkeit in Kontakt zu stehen, bereitzustellen. Die Zusammensetzung umfasst ein erstes Tensid und ein zweites Tensid, dadurch gekennzeichnet dass es sich beim ersten Tensid um eine alkoxylierte Verbindung handelt und es sich beim zweiten Tensid um eine ionische Verbindung oder amphotere Verbindung wie ein amphoterer Fettsäureester handelt. Die Zusammensetzungen welche sich hierfür eignen werden oben beschrieben. Insbesondere handelt es sich bei der Zusammensetzung um eine Mischung aus einem amphoteren Fettsäureester und einer alkoxylierten Verbindung, wobei es sich bei der Polymeroberfläche um eine Polymeroberfläche die vorzugsweise mit Trinkwasser, Spülwasser, Abwasser wie insbesondere Schwarzwasser, Grauwasser oder Gelbwasser in Kontakt steht, handelt.

Weiterhin ist es ein Gegenstand der vorliegenden Erfindung, eine Polymeroberfläche, die dazu bestimmt ist mit einer wässrigen Flüssigkeit in Kontakt zu stehen und welche auf mindestens einer Teiloberfläche der besagten Polymeroberfläche mit einer der oben genannten Zusammensetzungen behandelt wurde, bereitzustellen. Die Zusammensetzungen, welche sich hierfür eignen, werden oben beschrieben. Insbesondere handelt es sich bei der Zusammensetzung um eine Mischung aus einem amphoteren Fettsäureester und einer alkoxylierten Verbindung, wobei es sich bei der Polymeroberfläche um eine Polymeroberfläche die vorzugsweise mit Trinkwasser, Spülwasser, Abwasser wie insbesondere Schwarzwasser, Grauwasser oder Gelbwasser in Kontakt steht, handelt. Die Behandlung der Polymeroberfläche kann durch die Auftragung der oben genannten Zusammensetzung auf mindestens einer Teiloberfläche der besagten Polymeroberfläche erfolgen. Hierfür geeignete Verfahren sind beispielsweise Verfahren in denen die oben genannten Zusammensetzungen auf mindestens einer Teiloberfläche der besagten Polymeroberfläche oder auf die gesamte Polymeroberfläche aufgesprüht oder aufgepinselt werden, oder solche in denen mindestens eine Teiloberfläche der besagten Polymeroberfläche oder die gesamte Polymeroberfläche in ein Bad aus flüssiger Zusammensetzung getaucht oder getunkt werden.

Weiterhin ist es ein Gegenstand der vorliegenden Erfindung, ein Verfahren zur Verhinderung von Ablagerungen wie mineralische Ablagerungen auf einer Polymeroberfläche, die dazu bestimmt ist mindestens zeitweise mit einer wässrigen Flüssigkeit in Kontakt zu stehen, bereitzustellen, dadurch gekennzeichnet dass mindestens eine Teiloberfläche der Polymeroberfläche mit einer der oben genannten Zusammensetzungen kontaktiert wird, welche ein erstes Tensid und ein zweites Tensid umfasst, wobei es sich beim ersten Tensid um eine alkoxylierte Verbindung handelt und es sich beim zweiten Tensid um einen amphoteren Fettsäureesterhandelt, und dass vorzugsweise die besagte Zusammensetzung während des Kontakts mit mindestens einer Teiloberfläche erwärmt wird. Durch die Erhöhung der Temperatur, beispielsweise auf etwa 50 bis 95°C oder 65 bis 95°C, kann die Zeit, welche für eine erfolgreiche Behandlung benötigt wird, verringert werden. Wahlweise kann die so kontaktierte Teiloberfläche der Polymeroberfläche anschliessend von überschüssiger Zusammensetzung durch beispielsweise Waschen mit Lösungsmittel und/oder Wasser oder Waschlösung mit Detergenzien, befreit bzw. entfettet werden.

### BEISPIELE

Kunststoffplättchen aus schlagfestem SB (Styrol-Butadien Copolymer Typ PS 454N, erhältlich von Styrolution, Deutschland) wurden mit verschiedenen Zusammensetzungen behandelt.

### Zusammensetzung 1

Zusammensetzung 1 bestand aus 50 Gew.-% eines Phenol-Formaldehyd-Harz-Ethoxylat (Typ Witbreak DRA-21, erhältlich von AkzoNobel) und 50 Gew.-% eines Phosphatidylcholins (Typ LECICO F 200, CAS 8002-43-5).

### Zusammensetzung 2

Zusammensetzung 2 bestand aus 50 Gew.-% eines Distyrylphenol-Ethoxylats (CAS 104376-75-2) (Tensid 1) und 50 Gew.-% eines Phosphatidylcholins (CAS 8002-43-5) (Tensid 2).

### Zusammensetzung 3

Zusammensetzung 3 bestand aus 50 Gew.-% eines propoxylierten C12-C14-Alkohols (CAS 68409-59-6) und 50 Gew.% eines Phosphatidylcholins (CAS 8002-43-5)

### Versuchsaufbau

Zur Behandlung wurden die Kunststoffplättchen in die jeweilige Zusammensetzung getaucht und im eingetauchten Zustand im vorgeheizten Ofen bei 70°C während 60 Minuten gelagert. Anschliessend wurden die behandelten Kunststoffplättchen mit Haushaltspapier gereinigt und mit einen weichen Schwamm und lauwarmer Seifenlauge entfettet. Schlussendlich wurden die gereinigten Kunststoffplättchen mit Isopropanol und Wasser gespült und an der Luft getrocknet. Die gereinigten Kunststoffplättchen wurden gewogen und das Anfangsgewicht notiert.

Anschliessend wurden die Zusammensetzungen auf den so erhaltenen Testplättchen auf Ihre Eigenschaft untersucht, Kalk anzulagern. Hierzu wurden mehrere Proben gleichzeitig in eine Prüfapparatur gemäss Fig. 1 eingeführt.

Der Verkalkungstest wurde unter Standardbedingungen bei 21 +/- 1°C, einem Volumenstrom von ca. 0.32 1/min während einer Dauer von 16 Stunden mit einer aus Calciumchlorid und Natriumhydrogencarbonat frisch hergestellten Lösung mit einer Konzentration von 30 mmol Ca²⁺Ionen und 60 mmol Hydrogencarbonat-Ionen pro 61 durchgeführt. Dies ergibt eine Wasserhärte von 5 mmol/l Ca²⁺ (entsprechend 50 °fH bzw. 28 °dH), welche im Laufe des Experiments auf 18 °fH (ca. 10 °dH) sank.

Im Anschluss wurden die Testplättchen in demineralisiertes Wasser getaucht um nicht gebundene Kalkreste zu entfernen, getrocknet und nochmals gewogen. Aus der Differenz wurde die abgelagerte Kalkmenge berechnet.

Die Resultate sind in Tabelle 1 zusammengefasst:

**Tabelle 1**

| | Abgelagerte Kalkmenge | |
|---|---|---|
| | absolut (mg) (n = 3) | relativ (%) |
| Unbehandelt (Referenz) | 13.5 ± 0.8 | 100 |
| Zusammensetzung 1 | 3.7 ± 0.6 | 27 |
| Zusammensetzung 2 | 2.5 ± 0.4 | |
| | 4.2 (*) | 31 |
| Zusammensetzung 3 | 5.2 ± 0.7 | |
| | 6.8 (*) | 51 |

| | | |
|---|---|---|
| (*) umgerechnet auf gleichen Referenzwert (aus verschiedenen Verkalkungsversuchen) | | |

Wie aus der Tabelle 1 ersichtlich, ist es möglich, durch die Behandlung mit einer erfindungsgemässen Zusammensetzung die Kalkablagerungsmenge auf Polymerelementen, im Vergleich zu unbehandelten Polymerelementen, um fast 75% zu reduzieren.

Insbesondere die Zusammensetzung 2 hat sich zudem als besonders beständig herausgestellt, für den Fall dass ein molarer Überschuss Phosphatidylcholins darin enthalten war, wie aus der Tabelle 2 ersichtlich. Wenn ein Mengenverhältnis von 40/60 vorliegt, was bei einem Molgewicht von ca. 774 g/mol (Tensid 1) und einem mittleren Molgewicht von ca. 848 g/mol (Tensid 2) einem molaren Überschuss an Tensid 2 von ca. 37% entspricht, ist die ablagerungshemmende Wirkung sogar nach mehr als 1000 Wasserwechseln (WWs) immer noch ausgezeichnet. Die Imprägnierung wurde während 1 Stunde bei 70°C durchgeführt.

**Tabelle 2**

| **Tensid1/ Tensid2** | **Verkalkungstest** nach 20-30 WW (n=3) | **Verkalkungstest** nach 200 WW (n=3) | **Verkalkungstest nach** + 1000 WW (n=3) |
|---|---|---|---|
| 100/0 | **57 ± 6 %** | / | / |
| 83/17 | **51 ± 4 %** | / | / |
| 67/33 | **49 ± 11 %** | / | / |
| 50/50 | **79 ± 22 %** (*) | **24 ± 5 %** | **40 ± 7 %** |
| | / | **<0% !!** | **/** |
| 40/60 | / | **5 ± 3 %** | **58 ± 18 %** |
| | / | **20 ± 9 %** | **<0...23 %** |
| | / | **15 ± 13 %** | **<0....5 %** |
| 33/67 | **12 %** (n=2) | **36 ± 10 %** | **72 ± 17 %** |
| | / | 42 ± 8 % | **65 ± 8 %** |
| 30/70 | / | 33 ± 8 % | **77 ± 13 %** |
| 17/83 | **62 ± 9 %** | / | / |

### Bezugszeichenliste

| | | | |
|---|---|---|---|
| 1 | Prüfstand | 4 | Vorratsgefäss |
| 2 | Plättchen | 5 | Rührer |
| 3 | Testlösung | | |

## Patentansprüche

1. Zusammensetzung zur Verhinderung von mineralischen Ablagerungen auf einer Polymeroberfläche, die dazu bestimmt ist mit einer wässrigen Flüssigkeit in Kontakt zu stehen, umfassend ein erstes Tensid und ein zweites Tensid, **dadurch gekennzeichnet, dass** es sich beim ersten Tensid um mindestens eine alkoxylierte Phenolverbindung handelt und es sich beim zweiten Tensid um mindestens einen amphoteren Fettsäureester handelt und dass das zweite Tensid gegenüber dem ersten Tensid im molaren Überschuss vorliegt.

2. Zusammensetzung gemäss Anspruch 1, **dadurch gekennzeichnet dass** der molare Überschuss an amphoteren Fettsäureester mindestens 25% oder 25% bis 250%, bevorzugt mindestens 35% oder 35% bis 250 %, und mehr bevorzugt mindestens 40% oder 40% bis 200% beträgt.

3. Zusammensetzung gemäss Anspruch 1 oder 2, **dadurch gekennzeichnet dass** der amphotere Fettsäureester einen HLB-Wert zwischen 1 und 9 und bevorzugt zwischen 3 und 7 hat.

4. Zusammensetzung gemäss irgendeinem der vorangehenden Ansprüche, **dadurch gekennzeichnet dass** das zweite Tensid ein amphoteres Phospholipid ist insbesondere ein Phosphatidylcholin.

5. Zusammensetzung gemäss irgendeinem der vorangehenden Ansprüche, **dadurch gekennzeichnet dass** es sich bei der alkoxylierten Phenolverbindung um eine am aryl-substituierte Phenolverbindung, bevorzugt um eine styryl-substituierte Phenolverbindung handelt oder um eine distyryl-substituierte Phenolverbindung handelt.

6. Zusammensetzung gemäss irgendeinem der vorangehenden Ansprüche, **dadurch gekennzeichnet dass** es sich beim bei der alkoxylierten Phenolverbindung um eine Verbindung handelt, welche mindestens 10 oder 10 bis 15 Alkylenoxid-Wiederholeinheiten und insbesondere Ethylenoxid-Wiederholeinlieiten umfasst.

7. Zusammensetzung gemäss irgendeinem der vorangehenden Ansprüche, **dadurch gekennzeichnet dass** es sich beim bei der alkoxylierten Phenolverbindung um ein ethoxyliertes Distyrylphenol handelt und/oder welche vorzugsweise eine mittlere molaren Masse von zwischen 790 und 1010 g/mol hat.

8. Zusammensetzung gemäss irgendeinem der vorangehenden Ansprüche, **dadurch gekennzeichnet dass** die Zusammensetzung eine Flüssigkeit ist, in der das erste und das zweite Tensid gelöst sind.

9. Zusammensetzung gemäss irgendeinem der vorangehenden Ansprüche, **dadurch gekennzeichnet dass** es sich bei der Polymeroberfläche um eine Polymeroberfläche einer Sanitäranlage, wie beispielsweise die Innenoberfläche eines Rohrs oder einer Ventils, Wasserzähler oder Pumpe handelt und/oder dass es sich bei der wässrigen Flüssigkeit um Trinkwasser, Spülwasser, Abwasser wie insbesondere Schwarzwasser, Grauwasser oder Gelbwasser handelt.

10. Zusammensetzung gemäss irgendeinem der vorangehenden Ansprüche, **dadurch gekennzeichnet dass** es sich bei den mineralischen Ablagerungen um Kalkablagerungen oder um Urinstein handelt.

11. Zusammensetzung gemäss irgendeinem der vorangehenden Ansprüche, **dadurch gekennzeichnet dass** es sich bei Polymeroberfläche um eine Polyolefin- oder Polykondensatoberfläche handelt, insbesondere um schlagzäh-modifiziertes Polystyrol (HIPS), SB, oder PP handelt.

12. Verwendung einer Zusammensetzung gemäss irgendeinem der Ansprüche 1 bis 11 zur Verhinderung von mineralischen Ablagerungen auf einer Polymeroberfläche, die dazu bestimmt ist mit einer wässrigen Flüssigkeit in Kontakt zu stehen.

13. Element umfassend eine Polymeroberfläche, die dazu bestimmt ist mit einer wässrigen Flüssigkeit in Kontakt zu stehen, und welche auf mindestens einer Teiloberfläche der besagten Polymeroberfläche zur Verhinderung von mineralischen Ablagerungen mit einer Zusammensetzung gemäss irgendeinem der Ansprüche 1 bis 11 behandelt wurde.

14. Verfahren zur Verhinderung von mineralischen Ablagerungen auf einer Polymeroberfläche, die dazu bestimmt ist mit einer wässrigen Flüssigkeit in Kontakt zu stehen, **dadurch gekennzeichnet dass** mindestens eine Teilfläche der Polymeroberfläche mit einer Zusammensetzung gemäss irgendeinem der Ansprüche 1 bis 11 kontaktiert wird und bevorzugt während der Kontaktierung mit der Zusammensetzung wärmebehandelt wird.
